# EUROPÄISCHE PATENTANMELDUNG

(11) **EP 4 328 157 A1**
(43) Veröffentlichungstag der Anmeldung: **28.02.2024**
(21) Anmeldenummer: 22191363.5
(22) Anmeldetag: 22.08.2022
(51) Int. Cl.: B65G 21/12, B65G 47/53, B65G 47/64, B65G 47/71

(54) **PRODUKTAUSTRAGESTATION MIT MEHREREN AUSTRAGEBÄNDERN**

(71) Anmelder: Rotzinger AG, 4303 Kaiseraugst (CH)
(72) Erfinder: Philipp, Kurt, 79639 Grenzach-Wyhlen (CH)
(74) Vertreter: Braunpat AG

(57) **Zusammenfassung**

Die Erfindung betrifft eine Austragestation und ein Verfahren zum Austragen von Produkten aus einer Produktfördereinrichtung zu mehreren Weiterverarbeitungseinrichtungen (4). Die Austragestation (2) weist mehrere übereinander angeordnete Austragebänder (7) auf, die an ein Zufuhrband (1) der Produktfördereinrichtung zum Austragen von Produkten an eine Weiterverarbeitungseinrichtung (4) anschliessbar sind und im Wesentlichen quer zu einer Hauptförderrichtung (T) des Zufuhrbandes (1) verlaufen. Eine vertikal schwenkbare Bandweiche (8) ist an ihrem stationären Aufnahmeende (9) zur Aufnahme von Produkten an das Zufuhrband (1) und mit ihrem vertikal schwenkbaren Abgabeende (10) an eines von mehreren übereinander angeordneten Abgabebänder (11) zur Übergabe von Produkten angeschlossen. Jeweils ein Abgabeband (11) ist einem Austrageband (7) zugeordnet und endet auf einer Ebene des zugeordneten Austragebands (7) zur Abgabe von Produkten an das Austrageband (7).

## Beschreibung

### Technisches Gebiet der Erfindung

Die Erfindung betrifft eine Austragestation und ein Verfahren zum Austragen von Produkten aus einer Produktfördereinrichtung zu einer Weiterverarbeitungsanlage, insbesondere einer Weiterverarbeitungsanlage in Form einer Verpackungsanalage mit mehreren Verpackungseinrichtungen.

### Stand der Technik

Bei der Herstellung von Produkten in Form von Stückgütern in Produktionseinrichtungen und der anschliessenden Verpackung übernehmen Austragestationen die Produkte von einer an die Produktionseinrichtungen angeschlossene Hauptfördereinrichtung. Von einer Zufuhrlinie der Hauptfördereinrichtung werden die Produkte auf eine Austragestation übernommen, die in der Regel quer zu einer Hauptförderrichtung verlaufende Austragebänder umfasst.

Die Produkte werden vorzugsweise in Reihen produziert und somit auch als Reihen synchronisiert übernommen. Insbesondere bei Produkten der Lebensmittelindustrie ist es wichtig, dass die Produkte möglichst ohne Verzögerung an Weiterverarbeitungseinrichtungen, wie etwa Verpackungsanlagen, weitergeleitet werden können. Dabei kann es sich beispielsweise um Produkte im Bereich Süsswaren wie z. B. Schokoladetafeln, Schokoriegel und Biscuit handeln; aber auch um Getreideriegel, Cupcakes, Muffins, Kuchen und auch Gebäck aller Art. Diese zumeist in Reihen produzierten Produkte müssen auf kurzem Weg in die Verpackungsmaschine gelangen. So ergibt sich eine Zufuhrlinie, wo die Produktreihen auf einem breiten Hauptband (Prozessband) übernommen werden, und dann mit Austragestationen aus dem Fluss entnommen werden, um dann quer einer jeweiligen Verpackungseinrichtungen zugeführt zu werden. Dabei beschickt jede Austragestation eine nachgeschaltete Verpackungslinie. Diese Verpackungslinie kann aus mehreren in Reihe angeordneten Verpackungsmaschinen bestehen, wie z. B. Wickelmaschine, Multipackmaschine, Kartonierer, Palettierer, etc. Wenn eine Maschine in dieser Verpackungslinie stoppt, dann stoppt zwangsläufig die ganze Linie. Der Produktfluss wird dann weitergeleitet zu den in der Zufuhrlinie nachgeschalteten Austragestationen und damit auch zu den nachgeschaltet angeschlossenen Verpackungslinien.

Man definiert grundsätzlich zwei Arten der Produktaustragung, nämlich eine direkte Austragung und eine indirekte Austragung. Bei der direkten Austragung werden die auszutragenden Produktreihen immer direkt auf das Austrageband beschickt, und zwar immer dann, wenn letzteres über die benötigte Länge zur Aufnahme einer Produktreihe leer ist. So kann, abhängig von der Verpackungsleistung, entweder jede aufeinanderfolgende Reihe auf dem Hauptband ausgetragen werden oder jede zweite, jede dritte usw. Es ist also systematisch nur möglich, eine ganzzahlig teilbare Proportion aus dem Fluss auszutragen. Bei der indirekten Austragung der Produktreihen aus dem Produktfluss gelangen die Produktreihen zuerst auf einen Pufferplatz, bevor sie auf das Austrageband beschickt werden. Das hat den Vorteil, dass mehr als eine Reihe in der Produktaustrageeinheit gleichzeitig gehandhabt werden können. Somit ist es möglich, dass während des Ausfahrens einer Reihe auf dem Austrageband eine weitere Reihe aus dem Fluss entnommen werden kann und vorgepuffert wird, bis das Austrageband frei ist und mit eben dieser vorgepufferten Reihe beschickt werden kann. Eine solche Produktaustrageeinheit ist z. B. aus WO 2016/012229 A1 bekannt.

Die aus dem Stand der Technik bekannten Austragestationen werden dabei zu einer Zufuhrlinie hintereinander aufgereiht und können dabei eine beträchtliche Einbaulänge generieren. Ausserdem benötigen solche Linien zumeist noch Überlaufbänder oder Refeed-Pufferbänder, die den stattfindenden Überlauf an Produktreihen aufnehmen und zurückführen können.

Im Weiteren entstehen im Produktfluss zum Linienende hin immer grössere Lücken zwischen den Produkten, weil die vorderen Austragestationen schon Produktreihen aus dem Fluss entnommen haben. Um diese Lücken zu überbrücken und um die Verpackungslinien möglichst kontinuierlich mit Produkt zu beschicken, werden Austragestationen nötig, die mindestens eine Produktreihe bevorraten können. Bei Zufuhrsystemen mit mehr als drei in Reihe geschalteten Austragestationen werden diese Lücken im Produktfluss jedoch so gross, dass auch die Bevorratung von einer Produktreihe zumeist nicht mehr ausreicht, um diese Verpackungslinien lückenlos mit Produkt zu beschicken. Durch diese diskontinuierliche Beschickung der hinteren Verpackungslinien gibt es Folgestörungen und Stopps bei den Verpackungsmaschinen, was zusätzlichen Produktüberlauf generiert.

Aus der WO 2021/130294 A1 ist eine Austragestation bekannt, bei der hinter einem Produktzwischenspeicher mehrere Austragebänder übereinander angeordnet sind. Von jedem der Austragebänder können Produkte an ein Übernahmeband einer Verpackungslinie einer Verpackungseinrichtung ausgespeichert werden, sobald vorher ausgespeicherte Produkte abgeführt wurden. Entsprechend der Anzahl der übereinander angeordneten Austragebänder können mehrere Verpackungseinrichtung gleichzeitig mit Produkten beschickt werden. Zur Übernahme der Produkte von den Austragebändern sind die Übernahmebänder übereinander angeordnet und gemeinsam an eine Bandweiche angeschlossen, um die Übernahmebänder gleichzeitig auf die Höhe der Austragebänder bringen zu können. Derartige Austragstationen sind z. B. für Zwischenspeicher in Form von Kettenspeichern mit umlaufenden Produkttablaren geeignet. Das Ein- und Ausspeichern in solche Zwischenspeicher ist jedoch aufwendig. Zudem sind diese Anlagen nicht für Produkte geeignet, die nicht von den Tablaren ausgeschoben oder aufgeschossen werden können, wie etwa weiche oder klebrige Produkte, sondern vorsichtig auf dem Austrageband abgelegt werden müssen.

Es ist daher die Aufgabe der vorliegenden Erfindung, eine Austragstation und ein Austragverfahren zur Verfügung zu stellen, welches die vorgenannten Nachteile aufzulösen vermag. Insbesondere soll die Austragstation und das Austragverfahren platzsparend ausgebildet sein, eine schnelle, flexible und kontinuierliche Beschickung von mehreren Austragslinien möglichst unabhängig von einer Produktzufuhr ermöglichen und eine schonende Übergabe von Produkten an die Austragslinien erlauben.

### Zusammenfassung der Erfindung

Diese Aufgabe wird erfindungsgemäss durch eine Austragestation nach Anspruch 1, eine Produktionsanlage nach Anspruch 10 und ein Verfahren zum Austragen von Produkten nach Anspruch 15 gelöst. Vorteilhafte Ausgestaltungen und unterschiedliche Ausführungsvarianten der Erfindung gehen aus den Unteransprüchen hervor.

Eine Austragestation zum Austragen von Produkten aus einer Produktfördereinrichtung zu wenigstens einer Weiterverarbeitungsanlage, insbesondere zu einer Verpackungsanalage mit mehreren Verpackungseinrichtungen, nach der vorliegenden Erfindung weist mehrere, d. h. wenigstens zwei, übereinander angeordnete Austragebänder auf. Die Austragebänder sind zum Austragen von Produkten an eine Weiterverarbeitungseinrichtung der Weiterverarbeitungsanlage mittels einer Bandweiche an ein Zufuhrband der Produktfördereinrichtung anschliessbar und verlaufen im Wesentlichen quer zu einer Hauptförderrichtung des Zufuhrbandes. Die Bandweiche ist vertikal schwenkbare ausgebildet. Mit ihrem stationären Aufnahmeende ist die Bandweiche zur Aufnahme von Produkten an das Zufuhrband anschliessbar. Weiter ist die Bandweiche mit einem vertikal schwenkbaren Abgabeende ausgebildet, das zur Übergabe von Produkten an eines von mehreren übereinander angeordneten Abgabebänder anschliessbar ist. Jeweils ein Abgabeband ist einem Austrageband zugeordnet und endet auf einer Ebene des zugeordneten Austragebands zur Abgabe von Produkten auf das Austrageband.

Eine Produktionsanlage zur Produktion von Stückgütern nach der vorliegenden Erfindung weist eine Produktionseinrichtung zur Produktion von Produkten, eine Produktfördereinrichtung mit wenigstens einem Hauptförderband als Zufuhrband und mehrere Weiterverarbeitungseinrichtungen auf. Zwischen der Produktfördereinrichtung und den Weiterverarbeitungseinrichtungen ist eine Austragestation, wie oben dargestellt, vorgesehen. Die Austragestation zum Austragen von Produkten aus der Produktfördereinrichtung zu wenigstens einer Weiterverarbeitungsanlage ist an das Zufuhrband angeschlossen und verteilt die zugeführten Produkte mittels der Bandweiche über die mehreren Austragebänder zu den einem Austrageband zugeordneten Weiterverarbeitungseinrichtungen.

Ein Verfahren zum Austragen von Produkten aus einer Produktfördereinrichtung zu mehreren Weiterverarbeitungseinrichtungen nach der Erfindung ist insbesondere zum Austragen von Produkten zu Weiterverarbeitungseinrichtungen in Form von Verpackungseinrichtungen vorgesehen. Unter Verwendung einer oben geschilderten Austragestation werden Produkte von dem in der Hauptförderrichtung verlaufenden Zufuhrband mittels der Bandweiche auf die mehreren übereinander angeordneten und im Wesentlichen quer zur Hauptförderrichtung verlaufenden Austragebänder abgegeben. Von den Austragebändern werden die Produkte dann an die Verpackungseinrichtungen weitergeführt.

Die Produkte werden auf dem Zufuhrband meist in Produktreihen geführt, die quer zur Hauptförderrichtung verlaufen. Vorteilhaft sind die Bandweiche und die Abgabebänder breit genug ausgelegt, um die Produktreihen in dieser Querausrichtung vollständig aufzunehmen. Die Produktreihen werden dann von den Abgabebändern auf die quer zur Hauptförderrichtung verlaufenden Austragebänder übergeben, so dass die Produkte in Förderrichtung der Austragebänder einzeln hintereinander angeordnet sind.

Die Austragestation nach der vorliegenden Erfindung reduziert die Baulänge der Produktfördereinrichtung und reduziert den Platz, der zum Austragen von Produkten aus der Zufuhrline erforderlich ist, durch die übereinander liegenden Austragebänder. Die den Weiterverarbeitungseinrichtungen zugeordneten Austragebänder können mit der Bandweiche gezielt und flexibel je nach Status der angeschlossenen Weiterverarbeitungseinrichtung mit Produkten beschickt werden. Dadurch werden die Einrichtungen kontinuierlich mit Produkten beliefert und es können Standzeiten oder Überbelastungen von einzelnen Weiterverarbeitungseinrichtungen verhindert werden. Daher sind keine grossen Zwischenspeichereinrichtungen zum Zwischenspeichern von Produkten beispielsweise bei einem Stopp einer Weiterverarbeitungseinrichtung erforderlich.

Bei einer Ausführungsform der Austragestation nach der vorliegenden Erfindung liegen die Austragebänder unterhalb einer Bandnase des zugeordneten Abgabebands. Die Produkte können somit von der Bandnase auf die Ebene des Austragebands abgegeben werden. Vorteilhaft sind die Austragebänder nur knapp unterhalb der Bandnase vorgesehen, so dass kein Abstand von der Bandnase zur Ebene der Austragebänder entsteht, der gross genug wäre, um die Produkte bei der Übergabe zu beschädigen oder ein Umkippen der Produkte zu erlauben. Ein solcher knapper Abstand beträgt beispielsweise weniger als 5mm , vorzugsweise beträgt der Abstand 2-3mm. Somit können die Produkte sicher auf die Austragebänder aufgeschossen werden.

Beim Übertragen von Produkten von einem Band auf ein darauffolgendes Band wird zwischen zwei Arten unterschieden. Das sog. «Aufschiessen» bezeichnet eine Produktübergabe, bei der die mit einer definierten Geschwindigkeit zum Übergabebereich herangeführten Produkte infolge ihrer Trägheit über die Nase des heranführenden Bands hinaus "schiessen" und dadurch auf dem nachfolgenden Band platziert werden. Diese Art der Beschickung eignet sich beispielsweise für solide Produkte mit fester Konsistenz, in der Hauptsache Schokoladetafeln, Riegel und gebackene harte Biscuits. Demgegenüber bezeichnet das sog. «Ablegen» eine Produktübergabe, bei der die über die Bandnase überstehenden Produkte durch eine Relativbewegung zwischen den Bändern auf das Austrageband gezogen werden. Somit kann ein schonendes Ablegen des Produkts erfolgen. Hierfür können herkömmlich beispielsweise sogenannte Ablegepullnosebänder verwendet werden. Diese Produktübergabe eignet sich insbesondere für Produkte, die leicht brechen oder umfallen, eine weiche Konsistenz haben oder eher klebrig sind.

Um ein Ablegen der Produkte auf den Austragebändern der erfindungsgemässen Austragestation zu ermöglichen, sind bei einer Ausführungsform die Austragebänder relativ zu den Abgabebändern in Transportrichtung der Abgabebänder verschieblich gelagert. Die Austragebänder können somit quer zu ihrer Transsportrichtung unter den Abgabebändern, insbesondere unterhalb deren Bandnasen, zu den Abgabebänder hin und von diesen weg verfahren werden. Um ein sorgfältiges Ablegen der Produkte auf die Ebene der Austragebänder zu erlauben, werden die Austragebänder entgegen der Transportrichtung der Abgabebänder unter diese verschoben. Die Strecke der Verschiebung hängt dabei von der Form des abzulegenden Produkts und der Breite der Austragebänder ab. Um die Produkte mittig auf der Ebene abzulegen, werden die Austragebänder beispielsweise um die Hälfte einer Produktlänge unter den Abgabebändern verschoben. Sobald die Produkte von den Abgabebändern soweit über die Bandnasen hervorstehen, dass sie die Ebene der Austragebänder berühren, werden die Austragebänder in Transportrichtung der Abgabebänder um die Länge der Produkte verschoben. Dabei ziehen sie die Produkte vollständig auf die Austragebänderebenen, wodurch diese problemlos auf den Ebenen abgelegt werden können.

Die Austragebänder können auch mit ihrer vollständigen Breite unter den Abgabebänder herausgeschoben werden, so dass sie z. B. für eine Reinigung oder Wartung leicht zugänglich sind. Die Austragebänder können manuell oder mit einem herkömmlichen Antrieb, wie beispielsweise einem Servomotor, angetrieben werden.

Bei einer weiteren Ausführungsform der Austragestation nach der vorliegenden Erfindung ist zwischen der Bandweiche und einem Abgabeband wenigstens ein Bevorratungsband auf Höhe des Abgabebands vorgesehen. Dabei kann ein Bevorratungsband oder es können mehrere in Serie geschaltete Bevorratungsbänder vorgesehen sein. Die Bevorratungsbänder sind zur Aufnahme von Produkten von der Bandweiche und Abgabe der Produkte an das zugehörige Abgabeband ausbildet. Die Produkte können auf den Bevorratungsbändern zwischengelagert werden, bevor sie an die Abgabebänder weitergeleitet werden. Sie bilden somit einen Puffer, wodurch die Beschickung der Austragebänder noch flexibler gestaltet werden kann.

Ferner ist es bei der Austragestation nach der Erfindung möglich, ein Ausschleusband unterhalb des Abgabeendes der Bandweiche vorzusehen. Das Ausschleusband verläuft quer zu einer Hauptförderrichtung. Das Abgabeende der Bandweiche ist unterhalb das unterste Abgabeband der Austragestation absenkbar, sodass zwischen den Abgabebänder und dem Abgabeende eine Lücke entsteht durch die beispielsweise defekte Produkte oder eine Überproduktion auf das Ausschleusband abgegeben werden können.

Bei einem Ausführungsbeispiel einer Produktionsanlage nach der vorliegenden Erfindung weisen die Weiterverarbeitungseinrichtungen jeweils ein Verbindungsband auf, das an ein Austrageband der Austragestation anschliessbar ist. Die Verbindungsbänder können gerade oder kurvig ausgebildet sein und an die Positionierung der Weiterverarbeitungseinrichtungen angepasst werden. Vorzugsweise ist ein Aufnahmeende eines Verbindungsbands auf Höhe eines Austragebands vorgesehen, dem die Weiterverarbeitungseinrichtung zugeordnet ist. Zwischen den Verbindungsbändern und den Austragebändern können vorteilhaft jeweils wenigstens ein Lückenschliessband vorgesehen sein, mit welchem oder welchen sichergestellt wird, dass die Produkte auf den Verbindungsbändern kontinuierlich aufgereiht werden. Unerwünschte Lücken zwischen den Produkten werden verhindert, indem eine Geschwindigkeit der Lückenschliessbänder an den Takt der Produkte auf den Verbindungsbändern angepasst wird. Insbesondere kann die Geschwindigkeit der Lückenschliessbänder hierfür schneller als eine Geschwindigkeit der Austragebänder sein.

Bei einer weiteren Ausführungsform der Produktionsanlage kann eine erste Austragestation ein Bypassband vor den Abgabebändern aufweisen. Das Bypassband kann an eine zweite Austragestation anschliessbar sein. Das Bypassband ist beispielsweise unterhalb des Abgabeendes der Bandweiche vorgesehen, um einen möglichen Überlauf an Produktreihen aufzutakten und von Hand abzunehmen. Beispielsweise kann das Ausschleusband auch als Bypassband verwendet werden.

Das Verfahren zum Austragen von Produkten nach der vorliegenden Erfindung wird anhand der nachfolgenden Figurenbeschreibung genauer erläutert. Bei einer Variante des Austrageverfahrens werden die Produkte als quer zur Hauptförderrichtung verlaufende Produktreihen auf dem Zufuhrband einer Produktfördereinrichtung angeordnet und in diesen Reihen auf die Bandweiche übertragen. Vorteilhaft gruppiert eine Takteinrichtung bei der Übergabe der Produktreihen auf die Bandweiche mehrere der Reihen zu einer Produktformation, derart dass zwischen aufeinanderfolgenden Produktformationen ein Leerabstand ohne Produkte verbleibt. Beispielsweise kann die Takteinrichtung durch ein Zufuhrband der Produktfördereinrichtung bereitgestellt werden. Es ist auch möglich, dass die Takteinrichtung Bestandteil der Austragestation ist und beispielsweise durch ein der Bandweiche vorgeschaltetes Taktband gegeben ist, das eine getaktete Übergabe der Produktreihen an die Bandweiche vorsieht. Falls die Länge einer Produktformation, die Länge der Abgabebänder in Transportrichtung übersteigt, können jedem Abgabeband wenigstens ein Bevorratungsband vorgeschaltet werden. Vorzugsweise entspricht eine Länge des Bevorratungsband oder der Bevorratungsbänder wenigstens der Länge einer Produktformation. Die Anzahl an Produktreihen in einer Produktformation und damit die Länge der Formation wird vorzugsweise in Abhängigkeit einer Weiterverarbeitungsleistung einer Weiterverarbeitungseinrichtung, welcher die Produkte zugeführt werden, bestimmt.

Zusammenfassend stellt sich das Austrageverfahren wie folgt dar. Die von der Produktion übernommenen Produktreihen werden von Hauptbändern der Produktfördereinrichtung, die als Zufuhrband und Takteinrichtung dienen können, laufend zu Produktformationen gruppiert. Diese Produktformationen werden dann bei einer Freimeldung eines Bevorratungsbands über die Bandweiche dem entsprechenden Bevorratungsband zugeteilt. Gibt es dann eine Freimeldung des nachgeschalteten Abgabebands in dergleichen Lage, so wird die Produktformation auf dieses Abgabeband übergeben. Die vorderste Produktreihe der betreffenden Formation kann bei einer Freimeldung des angeschlossen Austragebands umgehend auf das Austrageband beschickt werden.

Da eine Produktformation immer aus einer genügend grossen Anzahl von Produktreihen besteht, ist sichergestellt, dass bei dem Abgabeband immer genügend Zeit vorhanden ist, um das vorgeschaltete Bevorratungsband wieder mit einer Produktformation über die Bandweiche nachzuladen. Laufen die Weiterverarbeitungseinrichtungen mit einer hohen Leistung oder müssen viele Weiterverarbeitungseinrichtungen mit Produkten beschickt werden, so muss die Bevorratung mit entsprechend grösseren Formationen erfolgen. Grössere Formationen bedeuten eine grössere Anzahl an Produktreihen pro Formation, d. h. ein entsprechend grösseren zeitlichen Vorrats auf den Bevorratungsbändern und damit auch die Garantie, dass die Weiterverarbeitungseinrichtungen nicht verhungern. Bei kleineren Weiterverarbeitungsleistungen können im Umkehrschluss die Formationen kleiner sein und die Bevorratungsbänder können entfallen und die Formationen oder Produktreihen können direkt über die Bandweiche auf die Abgabebänder zugeteilt werden.

Zur Steuerung der Austragestation, der Produktfördereinrichtung und/oder der gesamten Produktionsanlage kann eine Steuerung vorgesehen sein, die z. B. Daten einer Überwachungssensorik verarbeitet. Die Sensorik kann in bekannter Weise eine Vielzahl von Sensoren zur Überwachung der Bänder und Produkte in der Anlage umfassen. Beispielsweise liefert die Sensorik Informationen über vorhandene oder nicht vorhandene Produkte auf an einer Stelle auf den Bändern, und somit eine Freimeldung, bzw. eine Besetztmeldung. Ferner kann die Steuerung das Schwenken der Bandweiche sowie das Verschieben der Austragebänder kontrollieren.

Die Austragestation nach der vorliegenden Erfindung hat beispielweise eine Länge von 6 Metern und weist damit im Vergleich zu herkömmlichen Austragestationen eine sehr kurze Einbaulänge auf. Eine herkömmliche Austragelinie bestehend aus beispielsweise fünf Austragestationen zur Versorgung von fünf Weiterverarbeitungseinrichtungen nach dem Stand der Technik hätte eine Länge von rund 15 Metern. Bei der Austragestation nach der Erfindung ist die Einbaulänge fix und hängt nicht von der Anzahl an Weiterverarbeitungseinrichtungen ab. Durch die optionale Bevorratung können die Weiterverarbeitungseinrichtungen sicher, kontinuierlich und lückenlos mit Produkten beschickt werden. Die Beschickung der Einrichtungen ist dadurch unabhängig vom Produktfluss auf dem Zufuhrband der Produktfördereinrichtung. Die Weiterverarbeitungseinrichtungen beeinflussen sich gegenseitig nicht und können problemlos mit unterschiedlichen Geschwindigkeiten betrieben werden.

### Kurzbeschreibung der Zeichnungen

Die Erfindung wird im Folgenden anhand der Figuren dargestellt, die lediglich zur Erläuterung dienen und nicht einschränkend auszulegen sind. Aus den Figuren offenbar werdende Merkmale der Erfindung sollen einzeln und in jeder Kombination als zur Offenbarung der Erfindung gehörend betrachtet werden. In den Zeichnungen zeigen:
Fig. 1: einen drei-dimensionalen Ausschnitt einer Produktionsanlage mit einer Austragestation nach der vorliegenden Erfindung;
Fig. 2: eine drei-dimensionale schematische Darstellung einer Austragestation nach der vorliegenden Erfindung;
Fig. 3a-d: schematische Darstellungen von Sequenzen a bis d bei einem Aufschiessen von Produkten auf ein Austrageband einer Austragestation gemäss einem Verfahren nach der vorliegenden Erfindung;
Fig. 4a-d: schematische Darstellungen von Sequenzen a bis d bei einem Ablegen von Produkten auf ein Austrageband einer Austragestation gemäss einem Verfahren nach der vorliegenden Erfindung; und
Fig. 5: schematische Darstellungen eines Vorgangs zum Ausschleusen von Produkten bei einem Verfahren nach der vorliegenden Erfindung.

### Bevorzugte Ausführunasformen der Erfindung

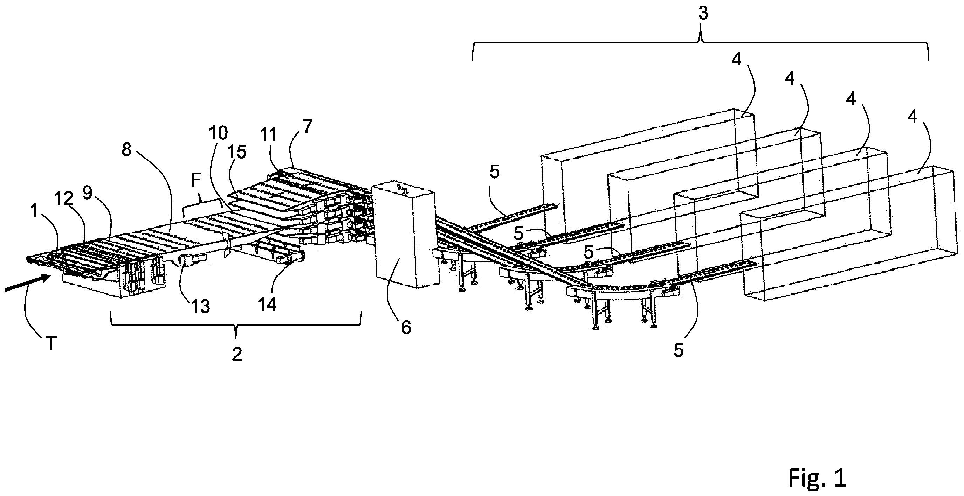

Figur 1 zeigt einen Ausschnitt einer bevorzugten Ausführungsform einer erfindungsgemässen Produktionsanlage zur Produktion von Stückgütern, die eine Produktionseinrichtung (nicht gezeigt), eine Produktfördereinrichtung mit einem Zufuhrband 1, eine Austragestation 2 und eine Weiterverarbeitungsanlage 3 mit mehreren Weiterverarbeitungseinrichtungen 4, insbesondere in Form von Verpackungseinrichtung, aufweist. Im gezeigten Beispiel sind vier Weiterverarbeitungseinrichtungen 4 vorgesehen. Das Zufuhrband 1 der Produktfördereinrichtung fördert Produkte in Form von Stückgut in einer Hauptförderrichtung T zur Austragestation 2. Die Weiterverarbeitungseinrichtungen 4 umfassen jeweils ein Verbindungsband 5, das an die Austragestation 2 angeschlossen ist. Zur Steuerung der Produktionsanlage, insbesondere der Produktfördereinrichtung, der Austragestation 2 und der Weiterverarbeitungsanlage 3 ist eine Steuereinrichtung 6 vorgesehen.

Die Austragestation 2 ist zum Austragen von Produkten aus der Produktfördereinrichtung an das Zufuhrband 1 angeschlossen. Die Austragestation 2 weist mehrere übereinander angeordnete Austragebänder 7 auf, die jeweils an ein Verbindungsband 5 einer Weiterverarbeitungseinrichtung 4 angeschlossen sind. Es ist ein Austrageband 7 für je eine Weiterverarbeitungseinrichtung 4 vorgesehen. Weiter umfasst die Austragestation 2 eine vertikal schwenkbare Bandweiche 8, die an einem stationären Aufnahmeende 9 zur Aufnahme von Produktreihen P an das Zufuhrband 1 angeschlossen ist. Die Bandweiche 8 ist mit einem vertikal schwenkbaren Abgabeende 10 an eines von mehreren übereinander angeordneten Abgabebändern 11 zur Übergabe von Produkten anschliessbar. Je ein Abgabeband 11 ist einem Austrageband 7 zugeordnet. Die Abgabebänder 11 enden auf einer Ebene der jeweils zugeordneten Austragebänder 7 zur Abgabe von Produktreihen P an das Austrageband. Die Bandweiche 8 und die Abgabebänder 11 sind hintereinander mit einer Transportrichtung in der Hauptförderrichtung angeordnet und die Austragebänder 7 sind quer zu dieser Transportrichtung vorgesehen.

Der Bandweiche 8 vorgeschaltet ist eine Takteinrichtung in Form eines Taktbandes 12, das mehrere Produktreihen P jeweils zu einer Produktformation F auf der Bandweiche 8 gruppiert, wobei zwischen aufeinanderfolgenden Produktformationen F eine Strecke ohne Produktreihen vorgesehen ist. Ein Bandantrieb 13 ist an der Bandweiche 8 angeordnet und treibt ein Förderband der Bandweiche 8 an.

Zusammengefasst umfasst die Austragestation 2 eine Reihe von Bändern zur synchronisierten Übernahme der Produktreihen P von der Produktionsanlage sowie Bänder zur Bildung einer Formation bestehend aus mehreren Produktreihen mit einem definierten kurzen Abstand zueinander. Ausserdem ist eine Bandweiche 8 bestehend aus einem vertikal schwenkbaren Förderband und dem Bandantrieb 13 vorgesehen. Ein unterhalb des Abgabeendes 10 der Bandweiche 8 angeordnetes Ausschleusband 14, liegt quer zur Hauptförderrichtung T. Wenn die Bandweiche 8 in eine untere Auswurfposition unterhalb der Abgabebänder 11 schaltet, dann können defekte Produktreihen auf das unterhalb liegende Ausschleusband 14 ausgeworfen werden. Optional sind der Bandweiche 8 mehrlagige Bevorratungsbänder nachgeschaltet angeordnet, die über die vorgeschaltete Bandweiche 8 mit Produktformationen F beschickt werden können. Den Bevorratungsbändern 15 nachgelagert sind die Abgabebänder 11, mit denen die Produktreihen P taktweise auf die unterhalb liegenden Austragebänder 7 gefördert werden. Diese Austragebänder 7 liegen quer zur Hauptförderrichtung T knapp unterhalb einer Bandnase 16 der Abgabebänder 11. Den Austragebänder 7 nachgelagert sind mehrere kurze Lückenschliessbänder 17, die dafür zuständig sind, die beim Abgabevorgang entstehenden Lücken im Produktfluss zu den Weiterverarbeitungseinrichtungen zu schliessen. Die dem Austragebändern nachgeschalteten Lückenschliessbänder 17 sind ebenso wie die Austragebänder 7 übereinander angeordnet. Die Lückenschliessbänder 17 sind den Verbindungsbändern 5 der Weiterverarbeitungseinrichtungen vorgeschaltet. Es können sicherlich bis zu fünf Lagen an Austragebändern 7 übereinander angeordnet werden, um dann fünf Weiterverarbeitungseinrichtungen mit Produkten zu beschicken.

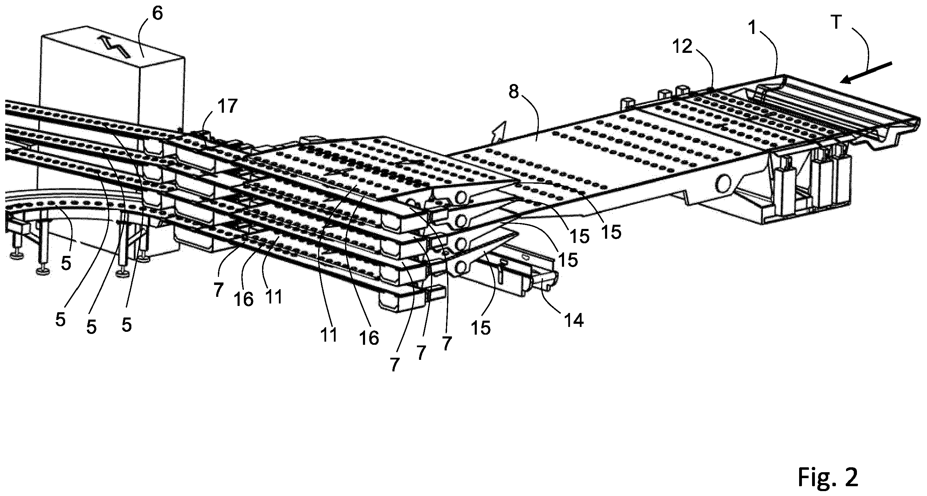

In Figur 2 ist das Austragsende der Austragestation 2 genauer dargestellt. Die Bandweiche 8 beschickt vier Lagen von in Serie geschalteten Bevorratungsbändern 15, Abgabebänder 11 und Austragebänder 7. Die Bevorratungsbändern 15, Abgabebänder 11 und Austragebänder 7 sind jeweils vertikal übereinander angeordnet, wobei die Austragebänder 7 geringfügig unterhalb der Abgabebänder 11 vorgesehen sind und eine Bandnase 16 der Abgabebänder 11 ungefähr mittig auf der Ebene der Austragebänder 7 endet. Die Lückenschliessbänder 17 schliessen sich axial an die Austragebänder 7 an. Die Produktformationen F werden von der Bandweiche 8 jeweils auf ein Bevorratungsband 15 übergeben, das für die Formation frei geworden ist. Von dort werden die Produktformationen F reihenweise an das dem Bevorratungsband 15 zugeordnete Abgabeband 11 übergeben, sobald auf dem Abgabeband 11 Platz für eine Produktreihe frei geworden ist. Sobald das nachgeschaltete Austrageband 7 über eine Länge, die der Länge einer Produktreihe entspricht, wird eine Produktreihe von dem Abgabeband 11 auf das Austrageband 7 abgegeben, so dass die Produkte nun einzeln hintereinander liegen. Von dem Austrageband 7 werden die Produkte auf das Lückenschliessband 17 und von dort auf das Verbindungsband 5 übertragen.

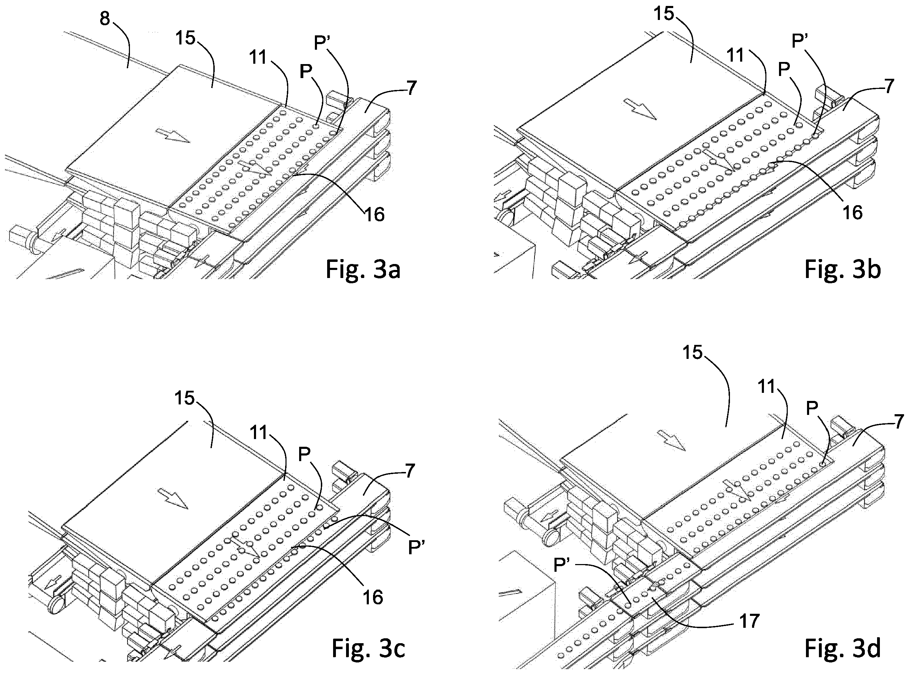

In den Figuren 3a bis 3d wird der Ablauf des Austragverfahrens beim Aufschiessen von Produktenreihen auf ein Austrageband 7 geschildert. Die Produkte bestehen in diesem Fall z. B. aus stabilen rundlichen Hartgebäck. In Figur 3a wird die vorderste Produktreihe P' an die Bandnase 16 des obersten Abgabebands 11 in Transportrichtung herangeführt und dem geringfügig unterhalb des Abgabebands 11 liegenden obersten Austrageband 7 angedient. In Figur 3b wird die Produktreihe P' durch die Geschwindigkeit des Abgabebands 11 über die Bandnase 16 aufgeschossen. Die Bandnase 16 ist in etwa um eine halbe Produktlänge vor einer Austrageachsedes Austragebands 7 entlang der Länge des Austrageband 7 ausgerichtet. Demnach endet in dieser Ausführungsform die Bandnase des Abgabebands circa eine halbe Produktlänge vor der Austrageachse des Abgabebands. In Figur 3c ist die Produktreihe P' auf dem Austrageband 7 platziert. Aufgrund des geringen Abstands zwischen Bandnase 16 und der Oberfläche des Austragebands 7 bleibt die Orientierung der Produkte unverändert. Sobald die Produktreihe P' auf das Austrageband 7 abgegeben ist, wird die Reihe auf dem Abgabeband 11 in Querrichtung zur ursprünglichen Transportrichtung auf das Lückenschliessband 17 gefördert, wobei sich das Lückenschliessband 17 direkt axial an das Austrageband 7 anschliesst. Sobald das Austrageband 7 von der Produktreihe P' entleert ist erfolgt eine Freimeldung an die Steuereinrichtung 6 und es wird eine nächste Produktreihe P an die Bandnase 16 herangeführt und aufgeschossen.

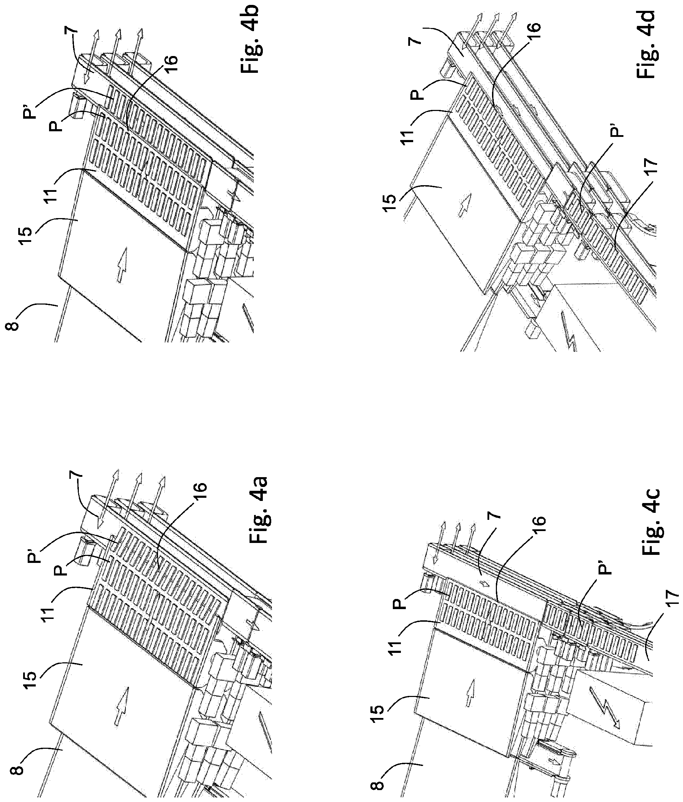

In den Figuren 4a bis 4d wird der Ablauf des Austragverfahrens beim Ablegen von Produktenreihen auf ein Austrageband 7 erläutert. Die Produkte bestehen in diesem Fall z. B. aus zerbrechlichen länglichen Biscuit, die vorsichtig auf der Ebene des Austrageband abgelegt werden müssen. Wie in Figur 3a ersichtlich, sind die übereinander angeordneten Austragebänder 7 hierfür in Richtung der Abgabebänder 11 verschoben. Die Austragebänder 7 sind daher gegenüber den Lückenschliessbändern 17 axial versetzt angeordnet. Wie in Figur 3a gezeigt, wird die vorderste Produktreihe P' auf dem Abgabeband 11 soweit an die Bandnase 16 vorgefahren, bis die Produkte über die Bandnase 16 hervorstehen. Es ist dabei auch möglich, dass die Produktreihe P' die Austragebandebene leicht berührt. Es ist jedoch ausreichend, dass die Produkte über die flach ausgeführte Bandnase 16 leicht abkippen können. Dann wird das Austrageband 7 in Hauptförderrichtung mit der vorzugsweise der gleichen Geschwindigkeit von dem Abgabeband 11 wegbewegt, wie das Produkt von der Austrageband 11 gefördert wird. Beim Verschieben zieht das Austrageband 7 die Produktreihe P' von der Bandnase 16 des Abgabebands 11 herunter, sodass die Produktreihe P' auf der Ebene des Austragebands 7 zu liegen kommt. Damit kann das Produkt schonend auf das Queraustrageband abgelegt werden, wie in Figur 4b gezeigt ist. Danach hat das Austrageband 7 die gleiche Austrageachse wie das angeschlossene Lückenschliessband 17 und die Produktreihe P' kann in Richtung der Weiterverarbeitungseinrichtung gefördert werden. Sobald die Produktreihe P' komplett ausgefahren und das Austrageband 7 leer ist, erfolgt eine Freimeldung für das Austrageband 7, so dass dieses zum Ablegen der nächsten Produktreihe wieder unter das Abgabeband 11 verschoben wird, wie in Figur 4d gezeigt ist.

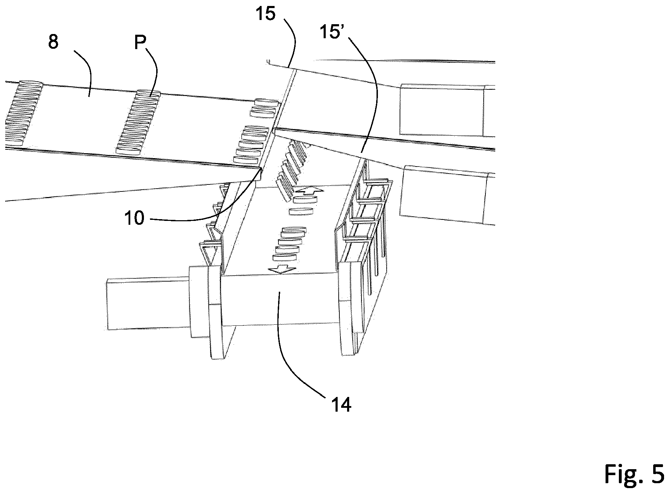

In Figur 5 wird ein Vorgehen zum Ausschleusen von Produkten gezeigt. Die Bandweiche 8 ist in eine untere Position verschwenkt worden, in der das Abgabeende 10 der Bandweiche 8 unterhalb eines Aufnahmeendes des untersten Bevorratungsbandes 15' zu liegen kommt. Es entsteht eine Lücke zwischen dem Aufnahmeende des untersten Bevorratungsbandes 15' und dem Abgabeende 10 der Bandweiche 8, die gross genug ausgebildet ist, dass Produkte hindurch fallen können. Das Ausschleusband 14 verläuft unterhalb des Abgabeendes 10 der Bandweiche 8 und nimmt die herabfallenden Produkte auf. Das Ausschleusband 14 transportiert die ausgeschleusten Produkte quer zur Hauptförderrichtung ab.

### Bezugszeichenlegende

- 1: Zufuhrband
- 2: Austragestation
- 3: Weiterverarbeitungsanlage
- 4: Weiterverarbeitungseinrichtung
- 5: Verbindungsband
- 6: Steuereinrichtung
- 7: Austrageband
- 8: Bandweiche
- 9: Aufnahmeende
- 10: Abgabeende
- 11: Abgabeband
- 12: Taktband
- 13: Bandantrieb
- 14: Ausschleusband
- 15, 15': Bevorratungsband
- 16: Bandnase
- 17: Lückenschliessband

- T: Hauptförderrichtung
- P: Produktreihe
- P': vorderste Produktreihe
- F: Produktformation

## Patentansprüche

1. Austragestation zum Austragen von Produkten aus einer Produktfördereinrichtung zu mehreren Weiterverarbeitungseinrichtungen (4), wobei die Austragestation (2) mehrere übereinander angeordnete Austragebänder (7) aufweist, die an ein Zufuhrband (1) der Produktfördereinrichtung zum Austragen von Produkten an eine Weiterverarbeitungseinrichtung (4) anschliessbar sind und im Wesentlichen quer zu einer Hauptförderrichtung (T) des Zufuhrbandes (1) verlaufen, **dadurch gekennzeichnet, dass**
eine vertikal schwenkbare Bandweiche (8) an einem stationären Aufnahmeende (9) zur Aufnahme von Produkten an das Zufuhrband (1) anschliessbar ist, und
die Bandweiche (8) mit einem vertikal schwenkbaren Abgabeende (10) an eines von mehreren übereinander angeordneten Abgabebänder (11) zur Übergabe von Produkten anschliessbar ist,
wobei jeweils ein Abgabeband (11) einem Austrageband (7) zugeordnet ist und auf einer Ebene des zugeordneten Austragebands (7) zur Abgabe von Produkten an das Austrageband (7) endet.

2. Austragestation nach Anspruch 1, **dadurch gekennzeichnet, dass** die Bandweiche (8) und die Abgabebänder (11) hintereinander mit einer Transportrichtung in der Hauptförderrichtung (T) angeordnet sind und die Austragebänder (7) quer zu dieser Transportrichtung vorgesehen sind.

3. Austragestation nach Anspruch 1 oder 2, **dadurch gekennzeichnet, dass** die Austragebänder (7) unterhalb einer Bandnase (16) der Abgabebänder (11) liegt.

4. Austragestation nach einem der vorhergehenden Ansprüche, **dadurch gekennzeichnet, dass** die Abgabebänder (11) eine flügelartige Bandnase (16) aufweisen, die relative zur Ebene der zugeordneten Austragebänder (7) einen vertikalen Abstand aufweisen..

5. Austragestation nach einem der vorhergehenden Ansprüche, **dadurch gekennzeichnet, dass** die Austragebänder (7) relativ zu den Abgabebändern (11) in Transportrichtung der Abgabebänder (11) verschieblich gelagert sind.

6. Austragestation nach einem der vorhergehenden Ansprüche, **dadurch gekennzeichnet, dass** zwischen der Bandweiche (8) und einem Abgabeband (11) wenigstens ein Bevorratungsband (15) auf Höhe des Abgabebands (11) vorgesehen ist, das zur Aufnahme von Produkten von der Bandweiche (8) und Abgabe der Produkte an das Abgabeband (11) ausbildet ist.

7. Austragestation nach einem der vorhergehenden Ansprüche, **dadurch gekennzeichnet, dass** ein Ausschleusband (14) unterhalb des Abgabeendes (10) der Bandweiche (8) vorgesehen ist, das quer zur Hauptförderrichtung (T) verläuft, und das Abgabeende (10) der Bandweiche (8) unterhalb einer Ebene des untersten Abgabebandes (11) absenkbar ist.

8. Austragestation nach einem der vorhergehenden Ansprüche, **dadurch gekennzeichnet, dass** den Austragebändern (7) jeweils wenigstens ein Lückenschliessband (17) nachgeschaltet ist, wobei die Lückenschliessbänder (17) übereinander angeordnet sind.

9. Austragestation nach einem der vorhergehenden Ansprüche, **dadurch gekennzeichnet, dass** eine Takteinrichtung (12) zur getakteten Abgabe von Produkten an die Bandweiche (8) vorgesehen ist, welche dazu ausgebildet ist, die Produkte in beabstandeten Produktformationen (F) an die Bandweiche (8) abzugeben.

10. Produktionsanlage zur Produktion von Stückgütern, die eine Produktionseinrichtung, eine Produktfördereinrichtung mit wenigstens einem Zufuhrband (1) und mehrere Weiterverarbeitungseinrichtungen (4) aufweist, wobei zwischen der Produktfördereinrichtung und den Weiterverarbeitungseinrichtungen (4) eine Austragestation (2) nach einem der vorhergehenden Ansprüche vorgesehen ist.

11. Produktionsanlage nach Anspruch 10, **dadurch gekennzeichnet, dass** ein Austrageband (7) für je eine Weiterverarbeitungseinrichtung (4) vorgesehen ist.

12. Produktionsanlage nach Anspruch 10 oder 11 **dadurch gekennzeichnet, dass** die Weiterverarbeitungseinrichtungen (4) jeweils wenigstens ein Verbindungsband (5) aufweisen, das an die Austragebänder (7) anschliessbar ist und zwischen den Verbindungsbändern (5) und den Austragebändern (7) jeweils wenigstens ein Lückenschliessband (17) vorgesehen ist.

13. Produktionsanlage nach einem der vorhergehenden Ansprüche 10 - 12, **dadurch gekennzeichnet, dass** eine erste Austragestation (2) ein Bypassband vor den Abgabebändern (11) aufweist, das an eine zweite Austragestation anschliessbar ist.

14. Produktionsanlage nach einem der vorhergehenden Ansprüche 10 - 13, **dadurch gekennzeichnet, dass** ein Zufuhrband (1) der Produktfördereinrichtung die Takteinrichtung der Austragestation (2) umfasst.

15. Verfahren zum Austragen von Produkten aus einer Produktfördereinrichtung zu mehreren Weiterverarbeitungseinrichtungen (4), wobei unter Verwendung einer Austragestation (2) nach einem der Ansprüche 1 bis 9 Produkte von einem in einer Hauptförderrichtung (T) verlaufenden Zufuhrband (1) auf mehrere übereinander angeordnete im Wesentlichen quer zur Hauptförderrichtung (T) verlaufende Austragebänder (7) abgegeben werden.

16. Verfahren zum Austragen von Produkten nach Anspruch 15, wobei zur Übergabe von Produkten von den Abgabebändern (11) an die Austragebänder (7) eine Bandnase (16) der Abgabebänder (11) über einer Ebene des zugeordneten Austragebands (7) angeordnet wird und das Austrageband (7) während einer Förderung von Produkten über die Bandnase (16) relativ zum Abgabeband (11) in Hauptförderrichtung (T) der Produkte verschoben wird.

17. Verfahren zum Austragen von Produkten nach Anspruch 15 oder 16, wobei die Produkte als quer zur Hauptförderrichtung (T) verlaufende Produktreihen (P) auf dem Zuführband (1) angeordnet und auf die Bandweiche (8) übertragen werden, wobei die Takteinrichtung (12) bei der Übergabe auf die Bandweiche (8) mehrere Produktreihen (P) zu einer Produktformation (F) gruppiert und zwischen aufeinanderfolgenden Produktformationen (F) ein Leerabstand verbleibt.

18. Verfahren zum Austragen von Produkten nach einem der Ansprühe 15 bis 17, wobei die Anzahl an Produktreihen (P) in einer Produktformation (F) in Abhängigkeit von der Weiterverarbeitungsleistung einer Weiterverarbeitungseinrichtung (4) bestimmt wird, welcher die Produkte der Produktreihe (P) zugeführt werden.

19. Verfahren zum Austragen von Produkten nach einem der Ansprühe 15 bis 18, wobei jedem Abgabeband (11) wenigstens ein Bevorratungsband (15) vorgeschaltet wird, falls die Länge einer Produktformation (F) die Länge des Abgabebands (11) in Hauptförderrichtung (T) übersteigt.

20. Verfahren zum Austragen von Produkten nach einem der Ansprühe 15 bis 19, wobei eine Geschwindigkeit der Lückenschliessbänder (17) in Abhängigkeit der Geschwindigkeit von Verbindungsbändern (5) derart bestimmt wird, dass Produkte hintereinander lückenlos auf die Verbindungsbänder (5) übergeben werden.
